# EUROPÄISCHE PATENTSCHRIFT

(11) **EP 2 363 947 B1**
(45) Veröffentlichungstag und Bekanntmachung des Hinweises auf die Patenterteilung: **16.05.2012**
(21) Anmeldenummer: 10155355.0
(22) Anmeldetag: 03.03.2010
(51) Int. Cl.: H02M 7/48, H02J 3/38, H02J 7/35, H02J 9/06

(54) **Wechselrichter mit mehrfach versorgtem Bordnetz**
Inverter with onboard network with multiple supplies
Onduleur doté d'un réseau de bord alimenté de plusieurs manières

(43) Veröffentlichungstag der Anmeldung: 07.09.2011
(73) Patentinhaber: SMA Solar Technology AG, 34266 Niestetal (DE)
(72) Erfinder: Müller, Burkard, 34123, Kassel (DE)
(74) Vertreter: Rehberg, Bernhard Frank

(56) Entgegenhaltungen:
- EP-A1- 2 058 921
- US-B1- 6 650 028
- EDELMOSER K H ET AL: "Bi-directional DC-to-DC converter for solar battery backup applications" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US LNKD- DOI:10.1109/PESC.2004.1355437, Bd. 3, 20. Juni 2004 (2004-06-20), Seiten 2070-2074, XP010739590 ISBN: 978-0-7803-8399-9
- TORRESAN H D ET AL: "Auxiliary power supplies for high voltage converter systems" POWER ELECTRONICS SPECIALISTS CONFERENCE, 2004. PESC 04. 2004 IEEE 35T H ANNUAL AACHEN, GERMANY 20-25 JUNE 2004, PISCATAWAY, NJ, USA,IEEE, US LNKD- DOI:10.1109/PESC.2004.1355824, 20. Juni 2004 (2004-06-20), Seiten 645-651VOL.1, XP010738063 ISBN: 978-0-7803-8399-9

## Beschreibung

### TECHNISCHES GEBIET DER ERFINDUNG

Die Erfindung bezieht sich auf einen Wechselrichter zur Einspeisung elektrischer Energie von einer Gleichstromquelle in ein Wechselstromnetz mit den Merkmalen des Oberbegriffs des unabhängigen Patentanspruchs 1. Ein solcher Wechselrichter weist eine Steuerung, die beispielsweise Schalter von Wechselrichterbrücken des Wechselrichters koordiniert taktet, und ein Bordnetz auf, das diese Steuerung mit elektrischer Energie versorgt.

Bei der Gleichstromquelle kann es sich insbesondere um einen Photovoltaikgenerator oder eine Windkraftanlage handeln. Das Wechselstromnetz kann ein öffentliches Stromnetz oder ein Inselnetz sein. Die Anzahl der Verbraucher in dem Wechselstromnetz ist nicht entscheidend. Entsprechend kann der Wechselrichter auch nur zur Versorgung eines einzigen Verbrauchers aus der Gleichstromquelle eingesetzt werden.

### STAND DER TECHNIK

Bei Wechselrichtern zur Einspeisung elektrischer Energie von einer Gleichstromquelle in ein Wechselstromnetz ist es bekannt, das Wechselstromnetz mit Hilfe eines DC/DC-Wandlers galvanisch von der Gleichstromquelle zu trennen. Ein solcher DC/DC-Wandler wird einem ausgangsseitigen DC/AC-Wandler des Wechselrichters vorgeschaltet und trennt einen an die Gleichstromquelle anschließbaren Gleichspannungszwischenkreis auf seiner Eingangsseite, beispielsweise durch einen Hochfrequenztransformator oder durch einen hochfrequenten Wechselspannungszwischenkreis mit kapazitiver galvanischer Trennung zwischen Eingang und Ausgang, galvanisch von einem Gleichspannungszwischenkreis zwischen ihm und dem DC/AC-Wandler. Dabei kann zwischen dem Gleichspannungszwischenkreis auf der Eingangsseite des DC/DC-Wandlers und der Gleichstromquelle noch eine weitere Wandlerstufe, beispielsweise in Form eines Hochsetz- oder Tiefsetzstellers, vorgesehen sein. Typischerweise ist die Kapazität des Gleichspannungszwischenkreises auf der Eingangsseite des DC/DC-Wandlers, mit dem die galvanische Trennung durchgeführt wird, kleiner als die Kapazität des Gleichspannungszwischenkreises zwischen dem DC/DC-Wandler und dem DC/AC-Wandler aus dem der DC/AC-Wandler gespeist wird, weil für die Versorgung des hochfrequenten Wechselspannungszwischenkreises des DC/DC-Wandlers eine kleinere Pufferkapazität ausreichend ist. Wenn der Wechselrichter umgekehrt abgeschaltet wird, muss die große Kapazität des Gleichspannungszwischenkreises zwischen dem DC/DC-Wandler und dem DC/AC-Wandler aus Sicherheitsgründen binnen definierter Zeit kontrolliert entladen werden.

Zur Versorgung eines Bordnetzes auch von Wechselrichtern der zuvor beschriebenen Art ist es bekannt, dass eine Bordnetzversorgung das Bordnetz über einen Sperrwandler aus einer Gleichspannung speist, die in einem Gleichspannungszwischenkreis des Wechselrichters vorliegt. Daher ist es bevorzugt, die Versorgung des Bordnetzes aus einem Gleichspannungszwischenkreis vorzunehmen, der bereits vor dem Aufstarten des Wechselrichters von einer angeschlossenen Gleichstromquelle aufgeladen wird. Als Ersatzversorgung wird bei einem bekannten Wechselrichter mit dem Merkmal des Oberbegriffs des unabhängigen Patentanspruchs 1 auf die Wechselspannung eines angeschlossenen Wechselstromnetzes zurückgegriffen.

Aus der EP 1 107 438 A2 ist eine Symmetrierschaltung für zwei in Reihe geschaltete Teilkapazitäten eines Gleichspannungszwischenkreises eines Inverters bekannt, bei der aus der über jeder der Teilkapazitäten abfallenden Teilspannung jeweils ein Sperrwandler gespeist wird, der eine von mehreren Primärwicklungen eines Transformators einer Bordnetzversorgung des Wechselrichters speist.

Aus der EP 2 058 921 A1 ist ein Wechselrichter zur Einspeisung elektrischer Energie von mindestens einer Gleichstromquelle in ein Wechselstromnetz mit den Merkmalen des Oberbegriffs des unabhängigen Patentanspruchs 1 bekannt. Hier ist eine Lade-/Entladeschaltung zwischen einen eingangsseitigen Zwischenkreis eines ausgangsseitigen DC/AC-Wandlers des Wechselrichters und einen Akkumulator geschaltet, um diesen Akkumulator einerseits aus dem eingangsseitigen Zwischenkreis des DC/AC-Wandlers aufzuladen und andererseits bei Bedarf auch den eingangsseitigen Zwischenkreis des DC/AC-Wandlers aus dem Akkumulator aufzuladen. Der Akkumulator dient zudem als sekundäre Spannungsquelle für die Bordnetzversorgung des bekannten Wechselrichters.

Aus der US 6,650,028 B1 ist eine Leistungsversorgung von elektronischen Geräten aus mehreren Stromquellen bekannt. Dabei weist ein Transformator mehrere elektrisch gegeneinander isolierte Primärwindungen, die aus den einzelnen Stromquellen gespeist werden, und eine Sekundärwindung für die Leistungsversorgung auf.

Aus Edelmoser, K. H. et al.: "Bi-directional DC-to-DC converter for solar battery backup applications" POWER ELECTRONICS SPECIALISTS CONFERENCE, 2004. PESC 04. 2004 IEEE 35th ANNUAL AACHEN, GERMANY 20-25 JUNE 2004, PISCATAWAY, NJ, USA, IEEE, US LNKD-DOI: 10.1109/PESC. 2004. 1355437. Bd. 3, 20. Juni 2004 (2004-06-20), Seiten 2070-2074, XP010739590 ISBN: 978-0-7803-8399-9 ist ein Wechselrichter zur Einspeisung elektrischer Energie von mehreren Photovoltaikgeneratoren in ein Wechselstromnetz bekannt, wobei ein eingangsseitiger Gleichspannungszwischenkreis eines ausgangsseitigen DC/AC-Wandlers des Wechselrichters über DC/DC-Wandler, die jeweils eine galvanische Entkopplung bewirken, sowohl aus den Photovoltaikgeneratoren als auch als Backup aus einer Batterie speisbar ist.

### AUFGABE DER ERFINDUNG

Der Erfindung liegt die Aufgabe zugrunde, einen Wechselrichter zur Einspeisung elektrischer Energie von einer Gleichstromquelle in ein Wechselstromnetz mit dem Merkmal des Oberbegriffs des unabhängigen Patentanspruchs 1 aufzuzeigen, der eine optimierte Bordnetzversorgung aufweist.

### LÖSUNG

Die Aufgabe der Erfindung wird durch einen Wechselrichter mit dem Merkmal des unabhängigen Patentanspruchs 1 gelöst. Bevorzugte Ausführungsformen des neuen Wechselrichters sind in den abhängigen Patentansprüchen definiert.

### BESCHREIBUNG DER ERFINDUNG

Bei dem neuen Wechselrichter wird das Bordnetz einerseits aus dem ersten Gleichspannungszwischenkreis auf der Eingangsseite des mindestens einen DC/DC-Wandlers und andererseits aus mindestens einem weiteren Gleichspannungszwischenkreis versorgt, der von dem ersten Gleichspannungszwischenkreis galvanisch getrennt ist. Dabei ist der mindestens eine weitere Gleichspannungszwischenkreis derjenige zwischen dem DC/DC-Wandler und dem DC/AC-Wandler. Die Versorgung aus dem ersten Gleichspannungszwischenkreis auf der Eingangsseite des mindestens einen DC/DC-Wandlers ist mit den Vorteilen verbunden, dass er mit ansteigender Ausgangsspannung der Gleichstromquelle von der Gleichstromquelle aufgeladen wird und hier somit eine Zwischenkreisspannung zur Verfügung steht, bevor der Wechselrichter aktiviert wird. Zudem hat elektrische Energie, die diesem Gleichspannungszwischenkreis entnommen wird, noch nicht den mindestens einen DC/DC-Wandler durchlaufen, was für den Wirkungsgrad der Bordnetzversorgung aus der Gleichstromquelle günstig ist. Die zusätzliche Versorgung des Bordnetzes aus dem mindestens einen weiteren Gleichspannungszwischenkreis zwischen dem DC/DC-Wandler und dem DC/AC-Wandler ist umgekehrt dahingehend von Vorteil, dass hieraus eine Versorgung des Bordnetzes auch dann noch möglich ist, wenn die Zwischenkreisspannung auf der Eingangsseite des DC/DC-Wandlers eingebrochen ist, weil keine elektrische Energie aus der daran angeschlossenen Gleichstromquelle mehr nachkommt oder sogar ein Totalausfall dieser Gleichstromquelle vorliegt, der zu einem Zusammenbruch der Zwischenkreisspannung des ersten Gleichspannungszwischenkreises führt. Zudem sorgt die Speisung des Bordnetzes aus dem Gleichspannungszwischenkreis zwischen dem DC/DC-Wandler und dem DC/AC-Wandler für eine Entladung dieses weiteren Zwischenkreises auch beim Abschalten der angrenzenden DC/DC- und DC/AC-Wandler. Entsprechend kann hier auf eine zusätzliche Entladungsvorrichtung, insbesondere einen Entladungswiderstand, verzichtet werden, die mit laufenden Leistungseinbußen verbunden ist. Dies kommt dem Gesamtwirkungsgrad des neuen Wechselrichters zugute.

Vorzugsweise versorgt eine Bordnetzversorgung des neuen Wechselrichters das Bordnetz vorrangig aus dem ersten Gleichspannungszwischenkreis auf der Eingangsseite des DC/DC-Wandlers und nur nachrangig aus dem mindestens einem weiteren Gleichspannungszwischenkreis, insbesondere wenn dieser zwischen dem DC/DC-Wandler und dem DC/AC-Wandler liegt. Diese Rangordnung bei der Versorgung des Bordnetzes trägt einmal dem Aufladen des ersten Gleichspannungszwischenkreises durch die Gleichspannungsquelle bereits vor dem Aufstarten des Gleichrichters Rechnung. Zum anderen kommt hier der Aspekt zum Tragen, dass der Wirkungsgrad bei der Bordnetzversorgung aus diesem ersten Gleichspannungszwischenkreis aufgrund der vermiedenen Wandlung durch den DC/DC-Wandler günstiger ist. Hinzu kommt, dass eine Energieentnahme aus dem weiteren Gleichspannungszwischenkreis zwischen dem DC/DC-Wandler und dem DC/AC-Wandler, die mit vertretbarem Aufwand nicht mit konstanter Rate erfolgen kann, die vorzugsweise konstant gehaltene Zwischenkreisspannung in diesem Gleichspannungszwischenkreis mit einer Störung überlagert. Dies wird soweit möglich verhindert, indem bei dem neuen Wechselrichter diesem weiteren Gleichspannungszwischenkreis nur dann elektrische Energie entnommen wird, wenn diese aus dem ersten Gleichspannungszwischenkreis auf der Eingangsseite des DC/DC-Wandlers nicht ausreichend zur Verfügung steht. Diese Situation tritt aber im Normalbetrieb nicht auf, so dass im Normalbetrieb die Zwischenkreisspannung in dem weiteren Gleichspannungszwischenkreis zwischen dem DC/DC-Wandler und DC/AC-Wandler nicht gestört wird.

Die Vorrangigkeit der Bordnetzversorgung aus dem ersten Gleichspannungszwischenkreis kann zum Beispiel durch einen Regler für die Bordnetzspannung realisiert werden, der die Einspeiseleistungen in das Bordnetz aus dem ersten Gleichspannungszwischenkreis und aus dem weiteren Gleichspannungszwischenkreis bestimmt, wobei für die beiden Einspeiseleistungen in das Bordnetz unterschiedliche Stellgrößen wirksam sind. Der Regler kann insbesondere so abgestimmt sein, dass er beim Unterschreiten des Sollwerts für die Bordnetzspannung zunächst die Einspeiseleistungsanforderung aus dem ersten Gleichspannungszwischenkreis auf der Eingangsseite des DC/DC-Wandlers hochsetzt. Wenn die Unterschreitung des Sollwerts für die Bordnetzspannung jedoch größer wird, fordert er auch Einspeiseleistung aus dem weiteren Gleichspannungskreis zwischen dem DC/DC-Wandler und DC/AC-Wandler an.

Der Regler der Bordnetzversorgung selbst kann bei dem neuen Wechselrichter zunächst aus dem ersten Gleichspannungszwischenkreis auf der Eingangsseite des DC/DC-Wandlers versorgt werden, bis die Bordnetzspannung vorliegt und er aus der Bordnetzspannung versorgt wird.

Alle voranstehend geschilderten Vorteile des neuen Wechselrichters aufgrund seiner neuen Bordnetzversorgung sind besonders groß, weil eine Kapazität des ersten Gleichspannungszwischenkreises auf der Eingangsseite des DC/DC-Wandlers typischerweise viel kleiner ist als die Kapazität des weiteren Gleichspannungszwischenkreises zwischen dem DC/DC-Wandler und dem DC/AC-Wandler, um insbesondere die Zwischenkreisspannung am Eingang des DC/AC-Wandlers mit hoher Pufferkapazität konstant zu halten. D. h., der neuen Bordnetzversorgung steht durch die zusätzliche Einspeisung aus dem Gleichspannungszwischenkreis zwischen dem DC/DC-Wandler und dem DC/AC-Wandler aufgrund der hohen Kapazität dieses weiteren Gleichspannungszwischenkreises eine erhebliche zusätzliche Menge an elektrischer Energie zur Verfügung, und sie ersetzt zugleich eine entsprechend groß dimensionierte Entladungseinrichtung zum sicheren Entladen der Kapazität dieses weiteren Gleichspannungszwischenkreises in definierter Zeit. Typischerweise beträgt die Kapazität des ersten Gleichspannungszwischenkreises auf der Eingangsseite des DC/DC-Wandlers weniger als 10 %, häufig weniger als 5% der Kapazität des weiteren Gleichspannungszwischenkreises zwischen dem DC/DC-Wandler und dem DC/AC-Wandler.

Konkret kann die Bordnetzversorgung einen aus dem ersten Gleichspannungszwischenkreis auf der Eingangsseite des DC/DC-Wandlers und einen aus dem weiteren Gleichspannungszwischenkreis zwischen dem DC/DC-Wandler und dem DC/AC-Wandler gespeisten Sperrwandler aufweisen. Vorzugsweise ist jedoch ein einziger Sperrwandler mit einem einzigen Übertrager vorgesehen, der sowohl aus dem ersten Gleichspannungszwischenkreis auf der Eingangsseite des DC/DC-Wandlers und als auch aus dem weiteren Gleichspannungszwischenkreis zwischen dem DC/DC-Wandler und dem DC/AC-Wandler gespeist wird. Jeder Sperrwandler kann im Voltage-Mode oder, was bei Schaltnetzteilen mit Sperrwandlern üblich ist, im Current-Mode geregelt sein.

Um die beiden Zweige der Bordnetzversorgung zusammenzuführen, kann die Bordnetzversorgung ganz allgemein einen Transformator mit zwei gegeneinander isolierten Primärwicklungen aufweisen, von denen eine aus dem ersten Gleichspannungszwischenkreis auf der Eingangsseite des DC/DC-Wandlers und die andere aus dem weiteren Gleichspannungszwischenkreis zwischen dem DC/DC-Wandler und dem DC/AC-Wandler gespeist wird. Die gegeneinander isolierten Primärwicklungen stellen die galvanische Trennung der beiden Gleichspannungszwischenkreise, aus denen die Bordnetzversorgung erfolgt, nicht in Frage. Wenn der DC/DC-Wandler neben der galvanischen Trennung dieser beiden Zwischenkreise auch eine Umspannung durchführt, so dass die beiden Zwischenkreisspannungen grundsätzlich differieren, ist es bevorzugt, wenn die beiden Primärwicklungen des Transformators der Bordnetzversorgung ein Windungsverhältnis aufweisen, das 50% bis 200%, insbesondere 70% bis 140%,,dies Umspannverhältnisses des DC/DC-Wandlers entspricht.

Wenn eine gleichzeitige Bestromung der beiden Primärwicklungen aus dem ersten und dem weiteren Gleichspannungszwischenkreis erfolgt, ist eine synchrone Bestromung der beiden Primärwicklungen des Transformators der Bordnetzversorgung sinnvoll. Dazu können grundsätzlich alle Schalter, über die die Primärwicklungen bestromt werden, synchronisiert sein. Wenn dazu alle Schalter von dem bereits angesprochenen einen Regler für die Bordnetzspannung angesteuert werden, ist es aus dem Gesichtspunkt der galvanischen Trennung der beiden Gleichspannungszwischenkreise auf beiden Seiten des DC/DC-Wandlers bevorzugt, wenn ein Taktsignal von dem Regler zu jedem Schalter für die Bestromung zumindest einer der beiden galvanisch getrennt Primärwicklungen aus einem der beiden Gleichspannungszwischenkreise über mindestens einen Optokoppler übertragen wird.

Um die Steuerung des neuen Wechselrichters auch dann aktivieren zu können, wenn keine Gleichstromquelle angeschlossen ist oder beispielsweise ein Photovoltaikgenerator als Gleichstromquelle bei Nacht über längere Zeit keine elektrische Energie liefert, kann die Bordnetzversorgung das Bordnetz weiterhin aus einem an den DC/AC-Wandler angeschlossenen Wechselstromnetz speisen. Dabei kann einem Regler für die Einspeiseleistung aus dem Wechselstromnetz ein kleinerer Sollwert für die Bordnetzspannung vorgegeben sein, als dem Regler für die Einspeiseleistung aus den beiden Gleichspannungszwischenkreisen. Solange das Bordnetz aus den Gleichspannungszwischenkreisen versorgt wird, wird so keine Einspeiseleistung aus dem Wechselstromnetz in das Bordnetz angefordert. Das Bordnetz kann darüber hinaus auch aus zusätzlichen Zwischenkreisen des Wechselrichters gespeist werden. Zwischen allen Versorgungen des Bordnetzes aus verschiedenen potenzialgetrennten Quellen ist aber sinnvoller Weise eine Priorisierung zugunsten der Quelle(n) vorzunehmen, die dem geringsten Energieverbrauch in Bezug auf die primäre Erzeugung der elektrischen Energie entspricht.

Auch bei dem neuen Wechselrichter können zwischen dem ersten Gleichspannungszwischenkreis auf der Eingangsseite des DC/DC-Wandlers und der Gleichstromquelle noch eine oder mehrere weitere Wandlerstufen, beispielsweise in Form eines Hochsetz- oder Tiefsetzstellers, vorgesehen sein, denen zusätzliche Zwischenkreise zugeordnet sein können. Der erste Gleichspannungszwischenkreis muss also nicht direkt an die Gleichstromquelle angeschlossen werden. Zwischen der Gleichstromquelle und dem ersten Gleichspannungszwischenkreis auf der Eingangsseite des DC/DC-Wandlers sollte aber keine galvanische Trennung gegeben sein, wenn der erste Gleichspannungszwischenkreis passiv, d. h. ohne aktive Ansteuerung der weiteren Wandlerstufen, aus der Gleichstromquelle aufladbar sein soll.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: skizziert eine Ausführungsform des erfindungsgemäßen Wechselrichter.
- **Fig. 2**: zeigt den Wechselrichter gemäß Fig. 1, wobei weitere Details seiner Bordnetz- versorgung dargestellt sind.
- **Fig. 3**: zeigt ein Beispiel für einen Regler für die Bordnetzversorgung des Wechsel- richters gemäß Fig. 1 und 2; und
- **Fig.** 4: skizziert einen weiteren, nicht unter die Patentansprüche fallenden Wechselrichter.

### FIGURENBESCHREIBUNG

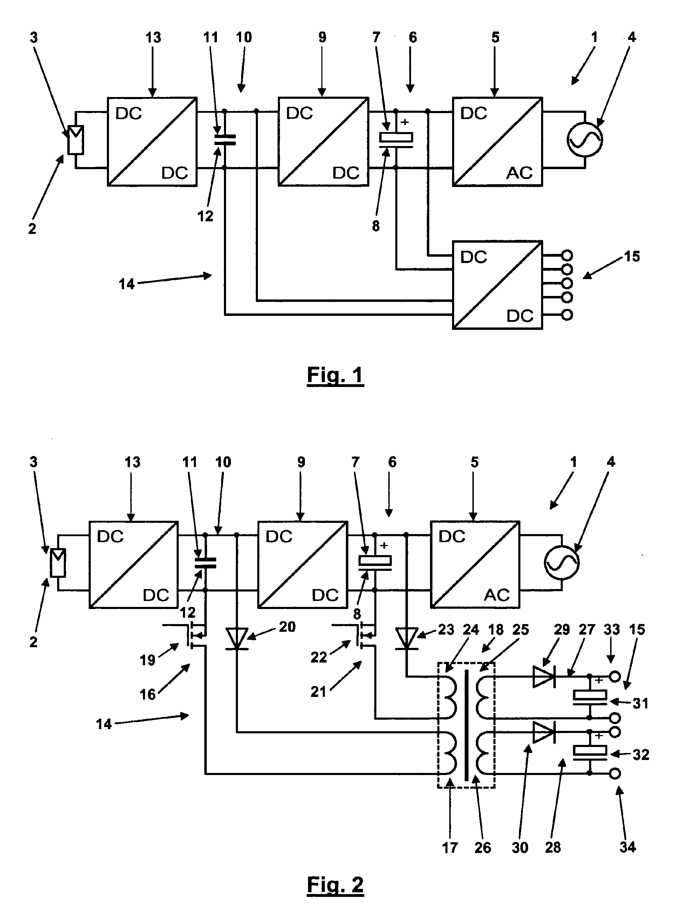

Der in **Fig. 1** skizzierte Wechselrichter 1 dient zur Einspeisung elektrischer Energie von einem Photovoltaikgenerator 2 als Beispiel für eine Gleichstromquelle 3 in ein Wechselstromnetz 4. Während das Wechselstromnetz 4 hier einphasig angedeutet ist, kann der Wechselrichter 1 auch zur Einspeisung in ein dreiphasiges Wechselstromnetz vorgesehen und ausgebildet sein. Angeschlossen an das Wechselstromnetz 4 weist der Wechselrichter 1 einen DC/AC-Wandler 5 auf, der taktweise elektrische Ladungen aus einem Gleichspannungszwischenkreis 6 entnimmt, um einen Wechselstrom in das Wechselstromnetz 4 einzuspeisen. Um die Zwischenkreisspannung des Gleichspannungszwischenkreises 6 trotz der mit der doppelten Netzfrequenz schwankenden Leistungsentnahme durch den DC/AC-Wandler 5 möglichst konstant zu halten, weist der Gleichspannungszwischenkreis 6 eine große Kapazität 7, hier in Form eines Elektrolytkondensators 8, von beispielsweise 1,5 mF auf. Nachgeladen wird der Gleichspannungszwischenkreis 6 über einen DC/DC-Wandler 9 aus einem Gleichspannungszwischenkreis 10. Dabei ist der DC/DC-Wandler 9 zur galvanischen Trennung zwischen dem Wechselstromnetz 4 und der Gleichstromquelle 3 vorgesehen und weist hierzu beispielsweise einen Hochfrequenztransformator auf, dessen Primärwicklung über eine Wechselrichterbrücke hochfrequent angesteuert wird, während ein von seiner Sekundärwicklung abfließender Strom von einer Gleichrichterbücke gleichgerichtet wird. Für die gewünschte Funktion des DC/DC-Wandlers 9 ist in dem Gleichspannungszwischenkreis 10 eine kleinere Kapazität 11, die hier in Form eines Folienkondensators 12 von beispielsweise 55 µF bereitgestellt wird, ausreichend. Dem Gleichspannungszwischenkreis 10 ist hier eine zusätzliche Wandlerstufe 13 vorgeschaltet. Diese bewirkt keine galvanische Trennung zwischen dem Gleichspannungszwischenkreis 10 und der Gleichstromquelle 3, sondern es handelt sich beispielsweise um Hochsetzsteller, der auch im inaktiven Zustand eine Aufladung der Kapazität 11 von der Gleichstromquelle 3 aus zulässt, wenn beispielsweise die Ausgangsspannung des Photovoltaikgenerators 2 am Morgen mit zunehmender Einstrahlung ansteigt. Eine Bordnetzversorgung 14 des Wechselrichters 1, die ein Bordnetz 15 des Wechselrichters 1 mit elektrischer Energie versorgt, bedient sich hierzu der Zwischenkreisspannung in dem Gleichspannungszwischenkreis 10 und der Zwischenkreisspannung in dem Gleichspannungszwischenkreis 6. Dabei erfolgt die Versorgung des Bordnetzes 15 solange wie möglich aus dem Gleichspannungszwischenkreis 10. Nur soweit diese Versorgung nicht gelingt, wird zusätzlich auf den Gleichspannungszwischenkreis 6 zurückgegriffen. Das Bordnetz 15 dient insbesondere zur Versorgung einer hier nicht dargestellten Steuerung für den Wechselrichter 1, die beispielsweise Schalter von Wechselrichterbrücken des DC/AC-Wandlers 5 und des DC/AC-Wandlers 9 koordiniert taktet. Durch die Speisung des Bordnetzes 15 aus dem Gleichspannungszwischenkreis 10 steht in dem Bordnetz 15 elektrische Energie zur Verfügung, sobald die Gleichstromquelle 3 den Gleichspannungszwischenkreis 10 auflädt. Wenn hingegen der Gleichspannungszwischenkreis 10 mit der Gleichstromquelle 3 ausfällt, steht noch für längere Zeit ausreichend elektrische Energie für das Bordnetz 15 in Form der auf den Elektrolytkondensator 8 gespeicherten elektrischen Ladung zur Verfügung, um beispielsweise die von dem Bordnetz versorgte Steuerung kontrolliert herunterzufahren.

**Fig. 2** lässt über die Darstellung von Fig. 1 hinaus folgende Details einer konkreteren Ausführungsform des Wechselrichters 1 deutlich werden. Die Bordnetzversorgung 14 ist als Sperrwandler mit zwei eingangsseitigen Sperrwandlerzweigen 16 und 21 und einem Transformator 18 als Übertrager ausgebildet. Der Sperrwandlerzweig 16 speist eine Primärwicklung 17 des Transformators 18 aus dem Gleichspannungszwischenkreis 10. Der Sperrwandlerzweig 16 weist als wesentliche Bestandteile einen Halbleiterschalter 19 und eine Diode 20 auf. Der entsprechend aus einem Halbleiterschalter 22 und einer Diode 23 aufgebaute Sperrwandlerzweig 21 ist vorgesehen, um aus dem Gleichspannungszwischenkreis 6 eine weitere Primärwicklung 24 des Transformators 18 zu speisen. Die beiden Primärwicklungen 17 und 24 des Transformators 18 sind gegeneinander elektrisch isoliert. Zwei ebenfalls gegeneinander elektrisch isolierte Sekundärwicklungen 25 und 26 des Transformators speisen jeweils über eine Gleichrichterschaltung 27 bzw. 28 aus einer Diode 29 bzw. 30 und einem Kondensator 31 bzw. 32 einen von mehreren Ausgangskreisen 33 und 34 des Bordnetzes. Die verschiedenen Ausgangskreise 33 und 34 dienen dazu, der Steuerung des Wechselrichters verschiedene Spannungen zur Verfügung zu stellen, die zudem galvanisch entkoppelt sind. Die Halbleiterschalter 19 und 22 werden getaktet, um elektrische Energie aus dem jeweiligen Gleichspannungszwischenkreis 10 bzw. 6 in den Transformator 18 zu speisen. Wenn diese Einspeisung gleichzeitig aus beiden Gleichspannungszwischenkreisen 10 und 6 erfolgt, muss und auch ansonsten kann die Taktung der Halbleiterschalter 19 und 22 synchronisiert sein. Aus jedem der Gleichspannungszwischenkreise 6 und 10 werden jeweils alle Ausgangskreise 33 und 34 des Bordnetzes 15 gespeist.

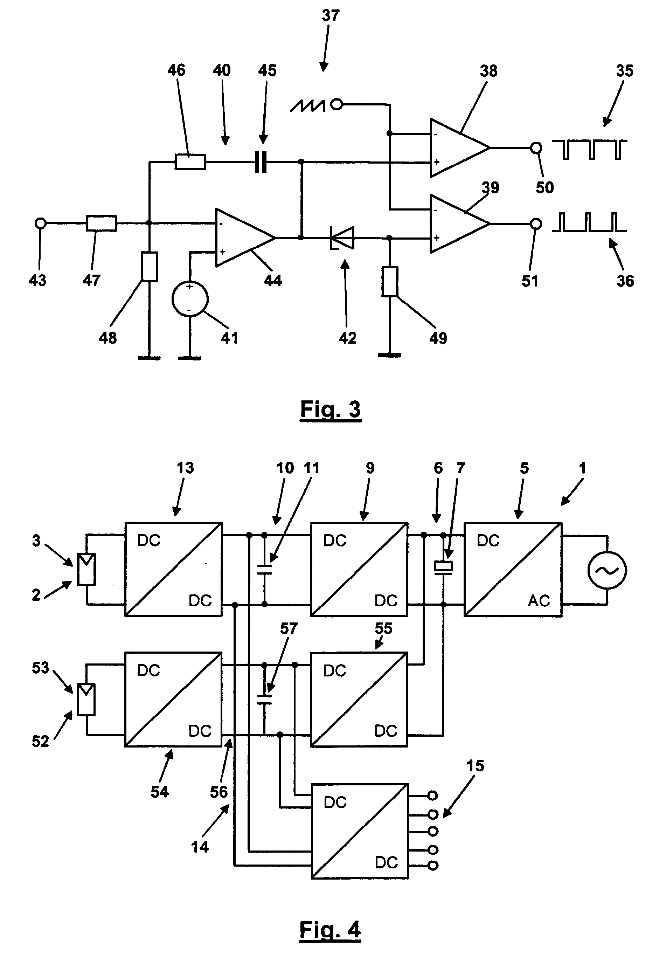

**Fig. 3** skizziert, wie Taktsignale 35 und 36 für die beiden Halbleiterschalter 19 und 22 generiert werden können. Dabei wird die Frequenz der Taktsignale 35 und 36 durch eine Sägezahnspannung 37 vorgegeben, die an dem jeweils einen Eingang von Komparatoren 38 und 39 anliegt. An dem jeweils anderen Eingang liegt ein Stellsignal von einem PI-Regler 40 an, dessen Sollwert von einer Spannungsquelle 41 vorgegeben wird. Dabei liegt das Stellsignal an dem anderen Eingang des Komparators 38 direkt an, während zwischen dem PI-Regler 40 und dem Komparator 39 eine Zener-Diode 42 geschaltet ist, die über einen Widerstand 49 bestromt wird. Die erforderliche Rückkopplung für den Vergleich mit dem Sollwert erhält der PI-Regler durch eine Bordnetzspannung des Bordnetzes 15 gemäß den Fig. 1 und 2, die an einem Eingang 43 anliegt. Kern des PI-Reglers ist ein Operationsverstärker 44. Die Charakteristik des PI-Reglers wird durch einen Kondensator 45 und Widerstände 46 und 47 bestimmt. Ein Widerstand 48 dient zur Arbeitspunkteinstellung. Um die beiden Sperrwandler 16 und 21 gemäß Fig. 2 galvanisch getrennt zu halten, obwohl ihre Taktsignale 35 und 36 von der gemeinsamen Schaltung gemäß Fig. 3 generiert werden, ist es bevorzugt, in zumindest einen der Ausgänge 50 und 51, insbesondere den Ausgang zu dem jeweils anderen Halbleiterschalter bzw. Sperrwandlerzweig, bei dem die Schaltung gemäß Fig. 3 nicht angesiedelt ist, einen Optokoppler zu schalten.

Während die Schaltung gemäß Fig. 3 eine Erzeugung der Taktsignale 35 und 36 im so genannten Voltage-Mode skizziert, kann die Erzeugung derartiger Taktsignale mit modulierter Pulsweite auch im üblichen Current-Mode erfolgen, indem das Ausgangssignal des PI-Reglers 40 nicht mit einer Sägezahnspannung 37 verglichen wird, sondern ein Vergleich mit dem in dem jeweiligen Sperrwandlerzweig tatsächlich fließenden Strom erfolgt.

Bei der in **Fig. 4** skizzierten Ausführungsform eines Wechselrichters 1 wird der Gleichspannungszwischenkreis 6 am Eingang des DC/AC-Wandlers 5 über zwei parallel geschaltete DC/DC-Wandler 9 und 55 durch zwei Gleichstromquellen 3 und 53 in Form von Photovoltaikgeneratoren 2 und 52 geladen. Dabei ist zwischen die DC/DC-Wandler 9 und 55 und die jeweilige Gleichstromquelle 3 und 53 jeweils eine Wandlerstufe 13 bzw. 54 geschaltet, die anders als die DC/DC-Wandler 9 und 55 keine galvanische Trennung des Gleichspannungszwischenkreises 10 bzw. 56 auf der Eingangsseite des jeweiligen DC/DC-Wandlers 9 bzw. 55 von der jeweiligen Gleichstromquelle 3 bzw. 53 bewirkt. Die Bordnetzversorgung 14 wird hier aus den beiden Gleichspannungszwischenkreisen 10 und 56 mit den Kapazitäten 11 bzw. 57 gespeist, die durch die beiden DC/DC-Wandler 9 und 55 galvanisch voneinander getrennt sind. Diese galvanische Trennung besteht bis in den Bereich der Bordnetzversorgung 14. Ein Zusammenbruch der Zwischenkreisspannung eines der Gleichspannungszwischenkreise 10 oder 56 aufgrund eines Fehlers im Bereich der Gleichstromquelle 3 bzw. 53 führt so auch nach längerer Zeit nicht zu einem Ausfall der Bordnetzversorgung 14.

### BEZUGSZEICHENLISTE

- 1: Wechselrichter
- 2: Photovoltaikgenerator
- 3: Gleichstromquelle
- 4: Wechselstromnetz
- 5: DC/AC-Wandler
- 6: Gleichspannungszwischenkreis
- 7: Kapazität
- 8: Elektrolytkondensator
- 9: DC/DC-Wandler
- 10: Gleichspannungszwischenkreis
- 11: Kapazität
- 12: Folienkondensator
- 13: Wandlerstufe
- 14: Bordnetzversorgung
- 15: Bordnetz
- 16: Sperrwandlerzweig
- 17: Primärwicklung
- 18: Transformator
- 19: Halbleiterschalter
- 20: Diode
- 21: Sperrwandlerzweig
- 22: Halbleiterschalter
- 23: Diode
- 24: Primärwicklung
- 25: Sekundärwicklung
- 26: Sekundärwicklung
- 27: Gleichrichterschaltung
- 28: Gleichrichterschaltung
- 29: Diode
- 30: Diode
- 31: Kondensator
- 32: Kondensator
- 33: Ausgangskreise
- 34: Ausgangskreise
- 35: Taktsignal
- 36: Taktsignal
- 37: Sägezahnspannung
- 38: Komparator
- 39: Komparator
- 40: PI-Regler
- 41: Spannungsquelle
- 42: Zener-Diode
- 43: Eingang
- 44: Operationsverstärker
- 45: Kondensator
- 46: Widerstand
- 47: Widerstand
- 48: Widerstand
- 49: Widerstand
- 50: Ausgang
- 51: Ausgang
- 52: Photovoltaikgenerator
- 53: Gleichstromquelle
- 54: Wandlerstufe
- 55: DC/DC-Wandler
- 56: Gleichspannungszwischenkreis
- 57: Kapazität

## Patentansprüche

1. Wechselrichter (1) zur Einspeisung elektrischer Energie von mindestens einer Gleichstromquelle (3) in ein Wechselstromnetz (4), mit einem an das Wechselstromnetz (4) anschließbaren DC/AC-Wandler (5), mit mindestens einem dem DC/AC-Wandler (5) vorgeschalteten, eine galvanische Trennung bewirkenden DC/DC-Wandler (9), mit einem an die mindestens eine Gleichstromquelle (3) anschließbaren ersten Gleichspannungszwischenkreis (10) auf der Eingangsseite des mindestens einen DC/DC-Wandlers (9) und mit einem eine Steuerung des Wechselrichters (1) mit elektrischer Energie versorgenden Bordnetz (15), wobei das Bordnetz (15) aus dem ersten Gleichspannungszwischenkreis (10) auf der Eingangsseite des mindestens einen DC/DC-Wandlers (9) und auch aus mindestens einem weiteren Gleichspannungszwischenkreis (6, 56) speisbar ist, der von dem ersten Gleichspannungszwischenkreis (10) galvanisch getrennt ist **dadurch gekennzeichnet, dass** der mindestens eine weitere Gleichspannungszwischenkreis (6) zwischen dem DC/DC-Wandler (9) und dem DC/AC-Wandler (5) vorgesehen ist.

2. Wechselrichter (1) nach Anspruch 1, **dadurch gekennzeichnet, dass** eine Kapazität (11) des ersten Gleichspannungszwischenkreises (10) kleiner ist als eine Kapazität (7) des mindestens einen weiteren Gleichspannungszwischenkreises (6).

3. Wechselrichter (1) nach Anspruch 2, **dadurch gekennzeichnet, dass** die Kapazität (11) des ersten Gleichspannungszwischenkreises (10) weniger als 10 %, vorzugsweise weniger als 5 % der Kapazität (7) des mindestens einen weiteren Gleichspannungszwischenkreises (6) beträgt.

4. Wechselrichter (1) nach mindestens einem der vorhergehenden Ansprüche, **dadurch gekennzeichnet, dass** eine Bordnetzversorgung (14) das Bordnetz (15) vorrangig aus dem ersten Gleichspannungszwischenkreis (10) und nachrangig aus dem mindestens einen weiteren Gleichspannungszwischenkreis (6) speist.

5. Wechselrichter (1) nach Anspruch 4, **dadurch gekennzeichnet, dass** die Bordnetzversorgung (14) einen Regler (40) für die Bordnetzspannung aufweist, der die Einspeiseleistungen in das Bordnetz (15) aus dem ersten Gleichspannungszwischenkreis (10) und aus dem mindestens einen weiteren Gleichspannungszwischenkreis (6) bestimmt, wobei die Nachrangigkeit der Speisung aus dem mindestens einen weiteren Gleichspannungszwischenkreis (6) durch unterschiedliche Stellgrößen für die beiden Einspeiseleistungen in das Bordnetz (15) festgelegt wird.

6. Wechselrichter (1) nach Anspruch 5, **dadurch gekennzeichnet, dass** der Regler (40) selbst zunächst aus dem ersten Gleichspannungszwischenkreis (10) und, sobald die Bordnetzspannung vorliegt, aus der Bordnetzspannung versorgt wird.

7. Wechselrichter (1) nach mindestens einem der vorhergehenden Ansprüche 4 bis 6, **dadurch gekennzeichnet, dass** die Bordnetzversorgung (14) einen aus dem ersten Gleichspannungszwischenkreis (10) gespeisten Sperrwandler und einen aus dem mindestens einen weiteren Gleichspannungszwischenkreis (6) gespeisten Sperrwandler aufweist.

8. Wechselrichter (1) nach mindestens einem der vorhergehenden Ansprüche 4 bis 6, **dadurch gekennzeichnet, dass** die Bordnetzversorgung (14) einen Sperrwandler aufweist, der sowohl aus dem ersten Gleichspannungszwischenkreis (10) als auch aus dem mindestens einen weiteren Gleichspannungszwischenkreis (6) speisbar ist.

9. Wechselrichter (1) nach Anspruch 7 oder 8, **dadurch gekennzeichnet, dass** jeder Sperrwandler (16, 21) im Current-Mode oder im Voltage-Mode geregelt ist.

10. Wechselrichter (1) nach mindestens einem der vorhergehenden Ansprüche 4 bis 9, **dadurch gekennzeichnet, dass** die Bordnetzversorgung (14) einen Transformator (18) mit zwei gegeneinander isolierten Primärwicklungen (17, 24) aufweist, von denen eine aus dem ersten Gleichspannungszwischenkreis (10) und die andere aus dem mindestens einen weiteren Gleichspannungszwischenkreis (6) bestromt wird.

11. Wechselrichter (1) nach Anspruch 10, **dadurch gekennzeichnet, dass** die beiden Primärwicklungen (17, 24) ein Windungsverhältnis aufweisen, das 70% bis 140% eines Umspannverhältnis des DC/DC-Wandlers (9) beträgt.

12. Wechselrichter (1) nach mindestens einem Anspruch 5 und 6 und gleichzeitig nach mindestens einem der Ansprüche 10 und 11, **dadurch gekennzeichnet, dass** ein Taktsignal (35, 36) von dem Regler (40) zu jedem Schalter (19, 22) für die Bestromung zumindest einer der beiden galvanisch getrennt Primärwicklungen (17, 24) aus einem der beiden Gleichspannungszwischenkreise (6, 10) über mindestens einen Optokoppler übertragen wird.

13. Wechselrichter (1) nach mindestens einem der vorhergehenden Ansprüche, **dadurch gekennzeichnet, dass** das Bordnetz (15) zusätzlich aus einem oder mehreren zusätzlichen Zwischenkreisen (56) des Wechselrichters (1) und/oder aus einem an den DC/AC-Wandler (5) angeschlossenen Wechselstromnetz (4) speisbar ist.

## Claims

1. Inverter (1) for feeding electric energy from at least one DC power source (3) into an AC power grid (4), comprising a DC/AC converter (5) connectable to the AC power grid (4), at least one DC/DC converter (6) connected upstream of the DC/AC converter (5) and providing a galvanic separation, a first DC voltage link (10) at the input side of the at least one DC/DC converter (9), which is connectable to the at least one DC power source (3), and an on-board network (15) supplying a controller of the inverter (1) with electric energy, wherein the on-board network (15) can be fed both out of the first DC voltage link (10) at the input side of the at least one DC/DC converter (9) and out of at least one further DC voltage link (6, 56), which is galvanically separated from the first DC voltage link (10), **characterized in that** the at least one further DC voltage link (6) is provided between the DC/DC converter (9) and the DC/AC converter (5).

2. Inverter (1) according to claim 1, **characterized in that** a capacitance (11) of the first DC voltage link (10) is smaller than a capacitance (7) of the at least one further DC voltage link (6).

3. Inverter (1) according to claim 2, **characterized in that** the capacitance (11) of the first DC voltage link (10) is less than 10 %, preferably less than 5 % of the capacitance (7) of the at least one further DC voltage link (6).

4. Inverter (1) according to at least one of the preceding claims, **characterized in that** an on-board network power supply (14) primarily feeds the on-board network (15) out of the first DC voltage link (10) and secondarily out of the at least one further DC voltage link (6).

5. Inverter (1) according to claim 4, **characterized in that** the on-board network power supply (14) comprises a voltage controller (40) for the on-board supply voltage, which defines the feeding power into the on-board network (15) out of the first DC power link (10) and out of the at least one further DC power link (6), wherein the subordination of the feed out of the at least one further DC voltage link (6) is defined by different variables for both feeding powers into the on-board network (15).

6. Inverter (1) according to claim 5, **characterized in that** the regulator (40) itself is fed at first out of the first DC voltage link (10) and, as soon as the on-board network voltage is present, out of the on-board network voltage.

7. Inverter (1) according to at least one of the preceding claims 4 to 6, **characterized in that** the on-board network power supply (14) comprises a flyback converter fed out of the first DC voltage link (10) and a flyback converter fed out of the at least one further DC voltage link (6).

8. Inverter (1) according to at least one of the preceding claims 4 to 6, **characterized in that** the on-board network power supply (14) comprises a flyback converter which can be fed both out of the first DC voltage link (10) and out of the at least one further DC voltage link (6).

9. Inverter (1) according to claim 7 or 8, **characterized in that** each flyback converter (16, 21) is operated in current mode or voltage mode.

10. Inverter (1) according to at least one of the preceding claims 4 to 9, **characterized in that** the on-board network power supply (14) comprises a transformer (18) having two primary windings (17, 24) isolated with regard to each other, one of which is fed with current out of the first DC voltage link (10) and the other of which is fed with current out of the at least one further DC voltage link (6).

11. Inverter (1) according to claim 10, **characterized in that** the two primary windings (17, 24) comprise a winding ratio which is 70 % to 140 % of a transformation ratio of the DC/DC converter (9).

12. Inverter (1) according to both at least one of the claims 5 and 6 and at least one of the claims 10 and 11, **characterized in that** a control signal (35, 36) is transmitted via at least one optocoupler from the voltage controller (40) to each switch (19, 22) for feeding power to at least one of the galvanically separated primary windings (17, 24) out of one of the two DC voltage links (6, 10).

13. Inverter (1) according to at least one of the preceding claims, **characterized in that** the on-board network (15) may additionally be fed out of one ore more additional links (56) of the inverter (1) and/or out of a DC power grid (4) connected to the DC/AC converter (5).

## Revendications

1. Onduleur (1) pour la conduite d'énergie électrique d'au moins une source de courant continu (3) à un réseau de courant alternatif (4), comportant un convertisseur CC/CA (5) raccordable au réseau de courant alternatif (4), au moins un convertisseur CC/CC (9) produisant une séparation galvanique, placé en amont du convertisseur CC/CA (5), un premier circuit intermédiaire de tension continue (10) raccordable à la ou les source(s) de courant continu (3) côté entrée du ou des convertisseur(s) CC/CC (9) et un réseau de bord (15) alimentant en énergie électrique une commande de l'onduleur (1), le réseau de bord (15) pouvant être alimenté à partir du premier circuit intermédiaire de tension continue (10) côté entrée du ou des convertisseurs CC/CC (9) et également à partir d'au moins un autre circuit intermédiaire à tension continue (6, 56), lequel est séparé de manière galvanique du premier circuit intermédiaire de tension continue (10), **caractérisé en ce que** le ou les autres circuits intermédiaires de tension continue (6) est/sont prévu(s) entre le convertisseur CC/CC (9) et le convertisseur CC/CA (5).

2. Onduleur (1) selon la revendication 1, **caractérisé en ce qu'**une capacité (11) du premier circuit intermédiaire de tension continue (10) est inférieure à une capacité (7) du ou des autres circuits intermédiaires de tension continue (6).

3. Onduleur (1) selon la revendication 2, **caractérisé en ce que** la capacité (11) du premier circuit intermédiaire de tension continue (10) s'élève à moins de 10 %, de préférence à moins de 5 %, de la capacité (7) du ou des autres circuits intermédiaires de tension continue (6).

4. Onduleur (1) selon l'une quelconque des revendications précédentes, **caractérisé en ce qu'**une alimentation du réseau de bord (14) alimente le réseau de bord (15) en premier lieu à partir du premier circuit intermédiaire de tension continue (10) et en second lieu à partir du ou des autres circuits intermédiaires de tension continue (6).

5. Onduleur (1) selon la revendication 4, **caractérisé en ce que** l'alimentation du réseau de bord (14) comporte un dispositif de régulation (40) pour la tension du réseau de bord, lequel dispositif détermine les puissances d'alimentation à destination du réseau de bord (15) à partir du premier circuit intermédiaire de tension continue (10) et à partir du ou des autres circuits intermédiaires de tension continue (6), la subordination de l'alimentation à partir du ou des autres circuits intermédiaires de tension continue (6) étant fixée par des grandeurs de réglage différentes pour les deux puissances d'alimentation à destination du réseau de bord (15).

6. Onduleur (1) selon la revendication 5, **caractérisé en ce que** le dispositif de régulation (40) même est alimenté tout d'abord à partir du premier circuit intermédiaire de tension continue (10) et, dès que la tension du réseau de bord est disponible, à partir de la tension du réseau de bord.

7. Onduleur (1) selon au moins l'une quelconque des revendications précédentes 4 à 6, **caractérisé en ce que** l'alimentation du réseau de bord (14) présente un convertisseur à oscillateur bloqué alimenté à partir du premier circuit intermédiaire de tension continue (10) et un convertisseur à oscillateur bloqué alimenté à partir du ou des autres circuits intermédiaires de tension continue (6).

8. Onduleur (1) selon au moins l'une quelconque des revendications précédentes 4 à 6, **caractérisé en ce que** l'alimentation du réseau de bord (14) comprend un convertisseur à oscillateur bloqué qui peut être alimenté à la fois à partir du premier circuit intermédiaire de tension continue (10) et du ou des autres circuits intermédiaires de tension continue (6).

9. Onduleur (1) selon la revendication 7 ou 8, **caractérisé en ce que** chaque convertisseur à oscillateur bloqué (16, 21) est réglé en mode « current » ou en mode « voltage ».

10. Onduleur (1) selon au moins l'une quelconque des revendications précédentes 4 à 9, **caractérisé en ce que** l'alimentation du réseau de bord (14) comporte un transformateur (18) pourvu de deux enroulements primaires (17, 24) isolés l'un par rapport à l'autre, enroulements dont l'un est alimenté en courant à partir du premier circuit intermédiaire de tension continue (10) et l'autre à partir du ou des autres circuits intermédiaires de tension continue (6).

11. Onduleur (1) selon la revendication 10, **caractérisé en ce que** les deux enroulements primaires (17, 24) présentent une proportion de spires qui s'élève à une valeur comprise entre 70 % et 140 % d'un quotient de transformation du convertisseur CC/CC (9).

12. Onduleur (1) selon au moins l'une quelconque des revendications 5 et 6 et en même temps selon au moins l'une quelconque des revendications 10 et 11, **caractérisé en ce qu'**un signal d'horloge (35, 36) est transmis du dispositif de régulation (40) à chaque commutateur (19, 22) pour l'alimentation en courant d'au moins l'un des deux enroulements primaires séparés de manière galvanique (17, 24) à partir de l'un des deux circuits intermédiaires de tension continue (6, 10), par le biais d'au moins un coupleur optoélectronique.

13. Onduleur (1) selon au moins l'une quelconque des revendications précédentes, **caractérisé en ce que** le réseau de bord (15) peut en outre être alimenté à partir d'un ou de plusieurs circuits intermédiaires supplémentaires (56) de l'onduleur (1) et/ou à partir d'un réseau de courant alternatif (4) raccordé au convertisseur CC/CA.
